# DEMANDE DE BREVET EUROPEEN

(11) **EP 0 821 996 A1**
(43) Date de publication de la demande: **04.02.1998**
(21) Numéro de dépôt: 97401727.9
(22) Date de dépôt: 17.07.1997
(51) Int. Cl.: B01D 63/06, B01D 65/00

(54) **Module de traitement de fluide(s) à membrane(s) rigide(s) et procédés le mettant en oeuvre**

(30) Priorité: 01.08.1996 FR 9609749
(71) Demandeur: Société des Ceramiques Techniques, 65460 Bazet (FR)
(72) Inventeur: Garcera, Daniel, 65000 Tarbes (FR); Laborde, Max, 65380 Benac (FR); Gillot, Jacques, 65310 Odos (FR)
(74) Mandataire: Hirsch, Marc-Roger

(57) **Abrégé**

Module de traitement de fluide(s) notamment ultra-pur(s), par séparation ou traitement catalytique, incluant au moins une membrane de traitement (1) en matériau fritté poreux. Ce module comporte:
- un carter (11) rigide compatible avec le(s) fluide(s) traité(s),
- au moins une plaque de compensation (21), perforée d'au moins un orifice (22) où une membrane vient en butée par l'intermédiaire d'un joint d'assemblage (24), cette plaque compatible avec le(s) fluide(s) traités possède un coefficient de dilatation correspondant à celui du carter où elle peut coulisser,
- au moins une plaque de compression (31) revêtue d'un matériau compatible avec le(s) fluide(s) traités qui s'applique et peut glisser contre une plaque de compensation,
- des tirants (41), fixés en périphérie de plaque(s) de compression et courant extérieurement au carter, pour assurer le maintien en position de la ou des membrane(s).

## Description

L'invention concerne un module de traitement de fluides notamment ultra-purs, par séparation ou transformation catalytique, ce module incluant au moins un élément de traitement de type membrane rigide ainsi que des procédés de traitement qui mettent en oeuvre un tel module. La séparation peut être par exemple une filtration de liquide par exemple une microfiltration, une ultrafiltration, une nanofiltration, ou une osmose inverse ou encore une filtration de gaz par la ou les membranes. La transformation catalytique peut être par exemple la réaction d'un fluide avec un catalyseur situé sur ou dans une membrane, ou encore la réaction d'un fluide qui circule d'un côté d'une membrane avec un deuxième fluide provenant de l'autre côté de cette membrane que ce deuxième fluide traverse, le rôle de la membrane étant alors de réguler le débit du deuxième fluide.

Une membrane est un élément séparateur qui comprend en général trois parties:
- un support rigide à porosité grossière, très perméable, qui donne à l'élément sa forme et sa solidité. Il est en général constitué d'un matériau fritté poreux qui peut être une céramique ou un métal, ou encore du carbone.
- une couche active très mince déposée sur la surface du support et qui assure la fonction de séparation. Cette couche active, qui est poreuse dans le cas d'une filtration, recouvre la surface intérieure du ou des canaux de l'élément séparateur, ou dans certains cas la surface extérieure quand il s'agit de tubes. Elle peut être déposée sur le support, ou sur une ou plusieurs sous-couches déposées elles-mêmes sur le support.
- un "étanchage" qui remplit la porosité de chaque extrémité du support, de façon à empêcher une communication entre les régions amont et aval du module par l'intermédiaire de la porosité grossière du support, dans le cas où la couche active ne recouvre pas toute la surface de l'extrémité du support. Des membranes de type multicanal sont décrites par exemple dans la publication "New ceramic filter media for crossflow microfiltration and ultrafiltration. J. Gillot, G Brinkman, D. Garcera, Fourth World Filtration Congress, 22-24 April 1986, Ostende, Belgique.

On entend ici par module l'ensemble qui comprend:
- une ou plusieurs membranes rigides de séparation ou de transformation catalytique, qui sont généralement de forme allongée usuellement tubulaire ou prismatique.
- un carter destiné à contenir le fluide à traiter et que la ou les membranes séparent en plusieurs cavités dont une au moins contient le fluide à traiter et une au moins contient le fluide traité.

Le carter comporte, ainsi que montré notamment sur la figure 1 du document EP-A-0270051:
- un tube-enveloppe dont l'axe est parallèle à l'axe des membranes tubulaires ou multitubulaires et qui est percé latéralement par des orifices servant à l'arrivée du fluide à traiter ou à l'évacuation du fluide traité.
- deux plaques d'extrémité perpendiculaires à l'axe du cylindre et qui en obturent les deux extrémités. Ces plaques sont percées d'au moins un et généralement de plusieurs orifices qui reçoivent chacun un joint d'assemblage pour une membrane ,le fluide à traiter ou traité circulant au travers de ces orifices.
- des joints d'assemblage situés entre les membranes et la paroi des orifices des plaques d'extrémité, ces joints assurant le maintien en place des membranes et l'étanchéité entre cavités dans le tube-enveloppe du carter.

De tels modules, connus, peuvent comprendre des membranes métalliques ou céramiques montées dans un carter métallique, typiquement en acier inoxydable, au moyen de joints en matériau élastomérique (par exemple EPDM, silicone, fluoroélastomére) comme décrit par exemple dans le document EP-A-0 270 051 ou EP-A- 0 385 089 .

Dans le cas des modules à membranes céramiques, le carter est typiquement un cylindre en acier inoxydable dans lequel une à une centaine de membranes tubulaires ou multitubulaires, d'une longueur de l'ordre d'un mètre, sont montées entre des joints élastomériques.

Cependant, ces modules ne permettent pas de traiter certains fluides ultra-purs, comme par exemple de l'eau ultra-pure. En effet, leur carter en acier inoxydable relargue des ions métalliques qui viennent diminuer la pureté du fluide traité, notamment dans le cas de l'eau ultra-pure, ce qui peut être particulièrement gênant lorsque cette eau est utilisée dans le domaine de la fabrication de composants électroniques ou dans le domaine pharmaceutique.

De même, il n'est pas possible de traiter des fluides corrosifs et notamment des liquides contenant des ions chlorure avec les modules envisagés ci-dessus.

Toutefois, il existe des matériaux ici appelés "matériaux compatibles" qui sont inertes vis-à-vis du ou des fluides avec lesquels ils sont susceptibles d'entrer en contact par exemple dans un module, dans la mesure où ils ne sont d'une part pas susceptibles d'être corrodés par ce ou ces fluides et d'autre part pas susceptible de les contaminer. Comme connu ces matériaux peuvent être plus ou moins bien adaptés à un fluide donné et une sélection est à faire parmi eux en fonction du ou des fluides considérés. Toutefois, il n'est pas envisageable de réaliser des modules mettant en oeuvre de tels matériaux par simple substitution d'un matériau compatible à un matériau jusqu'ici mis en oeuvre dans les modules connus, en raison des différences de comportement entre matériaux.

En effet, des matériaux compatibles, au sens succinctement donné ci-dessus, avec des fluides ultra-purs, tels certains polymères et par exemple le polyfluorure de vinylidène (PVDF) ont un coefficient de dilatation beaucoup plus élevé que celui des céramiques ou des métaux employés pour constituer les membranes rigides. Les montages classiques à joints élastomériques ne permettent pas de compenser cet écart de dilatation dès que les variations de température subies par le module dépassent une dizaine de degrés, ce qui est trop peu dans de nombreux cas d'application pour que le module soit utilisable en pratique.

Par ailleurs, les modules de l'art antérieur en acier inoxydable ne permettent pas non plus de traiter certains fluides corrosifs comme par exemple les liquides contenant des ions chlorure qui corrodent l'acier inoxydable. Il est alors nécessaire de recourir à des carters en matériaux spéciaux comme les alliages de titane, qui sont très onéreux.

Pour construire néanmoins un module selon la conception classique et qui ne relargue pas d'ions métalliques ou qui puisse traiter une grande variété de liquides corrosifs, on peut envisager de revêtir d'un polymère approprié tel que le PVDF toutes les surfaces intérieures d'un module de conception classique à carter en acier inoxydable. Cependant avec cette solution les orifices de la plaque d'extrémité présentent des arêtes vives qu'il est difficile de revêtir de façon uniforme. Par ailleurs, pour remplir leur rôle de maintien des membranes, les joints élastomériques sont soumis à des efforts considérables qui peuvent faire glisser le revêtement polymérique déposé sur la paroi de l'orifice ou endommager ce revêtement. Enfin, un tel carter constitué d'acier revêtu de polymère serait d'un coût plus élevé à cause de la complexité de l'opération de dépose du revêtement sur des surfaces de forme complexe.

La présente invention propose donc un module de traitement de fluide(s) notamment ultra-pur(s), par séparation ou traitement catalytique, incluant au moins une membrane rigide de traitement en matériau fritté poreux, de forme allongée usuellement tubulaire ou prismatique, logée dans un carter équipé de moyens coopérant avec les extrémités de la ou des membrane(s) pour le maintien de cette ou de ces dernière(s) en position.

Selon une caractéristique de l'invention, le module de traitement comporte un ensemble de constituants incluant:
- un carter , de type tube-enveloppe, préférablement cylindrique, qui est constitué en un matériau rigide compatible avec le fluide traité ou à traiter destiné à venir à son contact,
- une plaque de compensation, à une ou à chacune des extrémités du tube-enveloppe, cette plaque de compensation étant dimensionnée pour coulisser longitudinalement dans l'extrémité destinée à la recevoir du tube-enveloppe et étant perforée d'un ou de plusieurs orifices prévus pour recevoir chacun une extrémité d'une membrane y venant en butée, préférablement par l'intermédiaire d'un joint d'assemblage compatible avec le ou les fluide(s) avec lesquels il est en contact, ladite plaque de compensation étant constituée en un matériau qui est compatible avec le fluide circulant dans les orifices qu'elle comporte et qui possède un coefficient de dilatation correspondant, c'est-à-dire égal ou très voisin, de celui que possède le tube-enveloppe,
- une plaque de compression, à une ou à chacune des extrémités du tube-enveloppe où pénètre partiellement ladite plaque, au-delà de la plaque de compensation qui est positionnée à cette extrémité et contre laquelle elle vient s'appliquer en conservant une possibilité de plissement transversal, la ou chaque plaque de compression ayant une forte rigidité et étant constituée d'un matériau à forte résistance mécanique revêtu d'un matériau compatible avec le fluide circulant dans les orifices pour fluide qu'elle comporte, au moins dans les zones où ce fluide est susceptible de venir, lesdits orifices venant en continuité du ou des orifices de la plaque de compensation contre laquelle cette plaque de compression est appliquée, lorsque le module est assemblé,
- des tirants passant dans des trous ménagés à la périphérie de la ou de chaque plaque de compression et courant à l'extérieur du tube-enveloppe et au long de ce dernier, la ou chaque plaque de compression pressant sur la ou les extrémités de la ou des membrane(s) par l'intermédiaire de la plaque de compensation sur laquelle elle s'appuie pour assurer le maintien en position de cette ou de ces membrane(s) dans le tube-enveloppe, sous l'action des tirants mécaniquement mis en tension.

Selon une caractéristique de l'invention, le module comporte au moins une plaque de compensation ayant un matériau et un dimensionnement choisis en fonction de ceux des autres constituants du module que sont le tube-enveloppe, les membranes, les tirants et la ou les plaques de compression pour que les variations dimensionnelles de la ou des dites plaque(s) de compensation, en fonction de la température dans la gamme des températures susceptibles d'être atteintes par cette ou ces plaque(s) de compensation, se combinent à celles des autres constituants lors du fonctionnement du module dans la gamme de températures admise pour le ou les fluides traités, pour conserver l'élasticité des joints d'assemblage pour l'étendue de la gamme de températures prévue pour le fonctionnement du module en fonction du fluide ou des fluides traités.

Selon une caractéristique de l'invention, le module comporte au moins une plaque de compensation dont le dimensionnement en épaisseur entre plaque de compression et membrane(s) de traitement est fixé pour conserver l'élasticité des joints d'assemblage pour l'étendue de la gamme de températures prévue pour le fonctionnement du module en fonction du fluide ou des fluides traités.

Selon une caractéristique d'une variante de l'invention, le module comporte au moins une plaque de compression ayant des tirants qui prennent appui sur elle par l'intermédiaire d'éléments de compensation, du type cale compensatrice, dont l'action est complémentaire de celle de la ou des plaques de compensation et dont le matériau et les dimensions sont choisis en fonction de ceux des autres constituants du module que sont le tube-enveloppe, les membranes, les joints d'assemblage, les tirants et la ou les plaques de compression et de compensation.

Selon une caractéristique d'une variante de l'invention, le module comporte au moins une plaque de compression ayant des tirants qui prennent appui sur elle par l'intermédiaire d'éléments de compensation, du type ressort, dont l'action est complémentaire de celle de la ou des plaques de compensation et dont le matériau et les dimensions sont choisis en fonction de ceux des autres constituants du module que sont le tube-enveloppe, les membranes, les joints d'assemblage, les tirants et la ou les plaques de compression et de compensation.

Selon une caractéristique d'une variante de l'invention, le module comporte une gaine externe entourant le tube-enveloppe et les tirants de manière à rapprocher la température de ces derniers de celle des constituants du module qui sont en contact avec le ou les fluides traités.

Selon une caractéristique d'une variante de l'invention, le module comporte une plaque de compensation et une plaque de compression qui appuient respectivement l'une sur l'autre à leurs périphéries respectives, au delà du revêtement de matériau compatible avec le fluide circulant dans les orifices pour fluide qu'elle comporte, au moins un joint d'étanchéité périphérique étant inséré entre la plaque de compensation et une zone de la plaque de compression recouverte dudit matériau compatible à l'intérieur de la zone d'appui périphérique pour plaque de compensation que comporte la plaque de compression.

Selon une caractéristique d'une variante de l'invention, le module comporte une plaque de compensation qui est fixée au tube-enveloppe de manière étanche.

Selon une caractéristique d'une variante de l'invention, le module comporte un tube-enveloppe qui est doté d'une ouverture latérale pour fluide et qui porte un conduit débouchant hors du module, ce conduit étant fixé par un assemblage mécanique auxiliaire comportant un joint d'étanchéité inséré entre le conduit et le tube-enveloppe.

Selon une caractéristique d'une variante de l'invention, le module comporte un tube-enveloppe et une ou des plaques de compensation en polyfluorure de vinylidène, des joints d'assemblage en polytétrafluoréthylène, la ou les plaques de compression et les tirants étant préférablement en un métal tel que l'acier, le revêtement que porte la ou les plaques de compression étant en un matériau inerte à faible perméabilité, tel qu'un polymère fluoré.

Selon une caractéristique d'une variante de l'invention, le module comporte un tube-enveloppe et une ou des plaques de compensation en perfluoroalkoxy, des joints d'assemblage en polytétrafluoréthylène, la ou les plaques de compression et les tirants étant préférablement en un métal tel que l'acier, le revêtement que porte la ou les plaques de compression étant en un matériau inerte à faible perméabilité tel qu'un polymère fluoré.

Selon une caractéristique d'une variante de l'invention, le module comporte un tube-enveloppe et une ou des plaques de compensation en chlorure de polyvinyle surchloré , des joints d'assemblage en polytétrafluoréthylène, la ou les plaques de compression et les tirants étant préférablement en un métal, tel que l'acier, le revêtement que porte la ou les plaques de compression étant en un matériau inerte à faible perméabilité, préférablement en polyfluorure de vinylidène.

Selon une caractéristique d'une variante de l'invention, le module contient un produit catalyseur placé contre ou dans les membranes à l'intérieur du tube-enveloppe.

L'invention est aussi relative à un procédé de traitement par module tel que défini ci-dessus dans lequel le traitement consiste en une filtration d'un fluide choisi parmi l'eau ultra-pure, une solution contenant des ions chlorés, un liquide hydrocarboné.

Selon une variante de procédé de traitement par module tel que défini ci-dessus le traitement consiste en une filtration de gaz et notamment de gaz corrosif.

Selon une variante de procédé de traitement par module tel que défini ci-dessus le traitement comporte une phase de transformation catalytique de fluide.

L'invention, ses caractéristiques et ses avantages sont précisés dans la description détaillée qui suit en relation avec les figures répertoriées ci-dessous.

La figure 1 présente une coupe longitudinale partielle d'un ensemble comportant une extrémité d'un module de traitement selon l'invention et d'un élément de raccord destiné à permettre la mise en liaison du module avec un agencement permettant un transit ou une accumulation de fluide dans une installation.

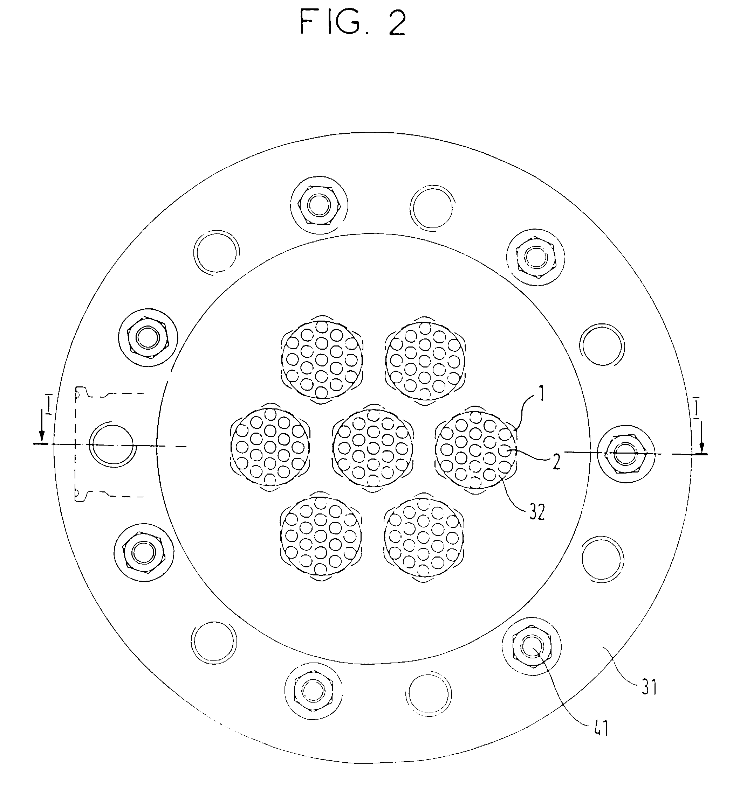

La figure 2 présente une vue en bout d'une extrémité de module.

la figure 3 présente une coupe transversale selon III-III d'un sous-ensemble associant un tube-enveloppe et un assemblage mécanique auxiliaire pour conduit latéral d'écoulement de fluide d'une variante de module selon l'invention.

La figure 4 présente une coupe relative à un détail de réalisation du sous-ensemble tirant-plaque de compression d'une variante de module selon l'invention.

La figure 5 présente une coupe relative à un détail de réalisation du sous-ensemble tube-enveloppe-plaque de compression-plaque de compensation d'une variante de module selon l'invention.

La figure 6 présente une coupe transversale d'un sous-ensemble associant un tube-enveloppe et un assemblage mécanique auxiliaire pour conduit latéral d'écoulement de fluide d'une variante de module selon l'invention.

La figure 7 présente une coupe selon VII-VII du sous-ensemble montré en figure 6.

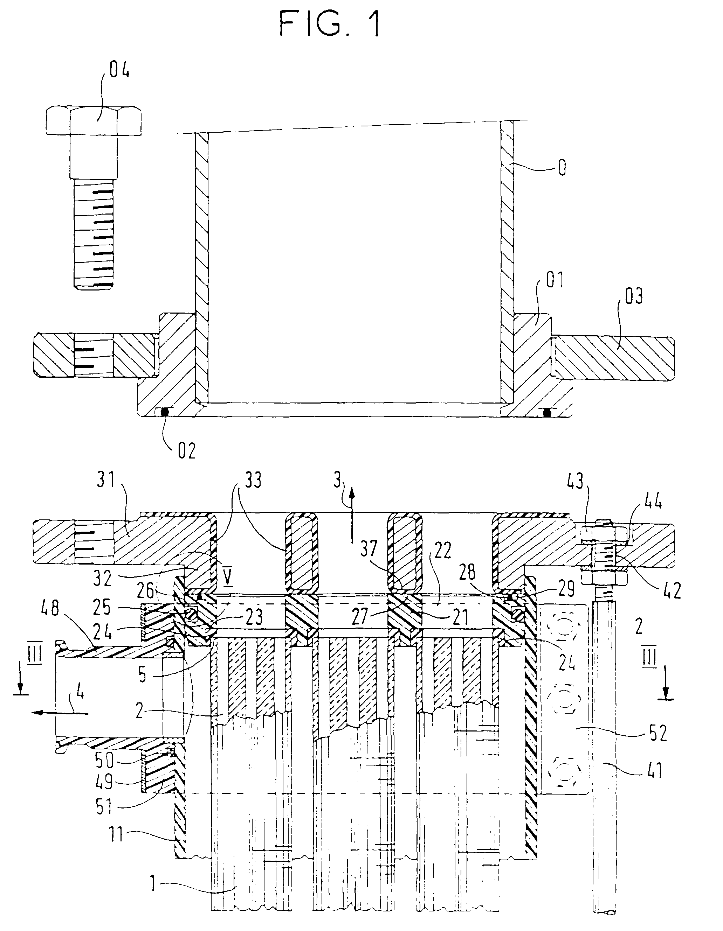

Comme indiqué ci-dessus, la figure 1 représente une des deux extrémités d'un module de traitement selon l'invention de forme allongée, supposé coupé à courte distance de cette extrémité, ainsi qu'une extrémité complémentaire d'un élément de raccord destiné à permettre la mise en liaison du module avec un agencement non représenté permettant un transit ou une accumulation de fluide, dans une installation

Dans une forme préférée de réalisation les deux extrémités d'un module sont réalisées de manière symétrique par rapport à un plan transversal médian non représenté du module.

L'élément de raccord est ici supposé comporter un tube de circulation de fluide 0 dont l'extrémité visible est munie d'un embout d'étanchéité 01, creux, fixé sur le tube 0 et destiné à venir se plaquer contre l'extrémité du module de traitement de manière à permettre une circulation de fluide entre ce module et l'agencement non représenté de transit ou d'accumulation de fluide qu'il dessert. Un joint circulaire 02, ici supposé torique, est destiné à assurer l'étanchéité du raccordement, lorsque l'embout d'étanchéité 01 est fixé au module par un montage à bride 03 et vis 04.

Le module de traitement selon l'invention présenté comporte au moins une et usuellement plusieurs membranes 1 constituées d'un matériau rigide choisi parmi les céramiques, le carbone et les métaux. Ces membranes sont disposées parallèlement à l'axe du module.

Chaque membrane 1 comporte des canaux longitudinaux 2 dans lesquels circule le fluide à traiter ou le fluide traité, les flèches 3 et 4 symbolisant la circulation de ces fluides dans le premier cas.

Un tube-enveloppe 11 constitue la paroi latérale cylindrique du module et entoure les membranes 1.

Une plaque de compensation 21 vient se positionner à au moins une des extrémités du module à l'intérieur du tube-enveloppe dans lequel elle est susceptible de coulisser en raison de son dimensionnement. Cette plaque comporte des orifices 22 qui son situés en regard des canaux 2 des membranes, lorsque le module est assemblé.

Les orifices 22 comportent chacun un épaulement interne 23 lui permettant de recevoir et de servir au moins partiellement de logement à un joint d'assemblage 24 lui-même prévu pour recevoir une extrémité d'une des membranes 1. Ces joints d'assemblage 24 maintiennent les membranes 1 par compression d'un rebord 5 ménagé au niveau de la face d'extrémité des membranes.

Un joint torique 25 situé dans un logement 26 de la plaque de compensation 21 assure l'étanchéité entre la face latérale de cette et le tube-enveloppe 11, ce joint préserve la possibilité de glissement de la plaque par rapport au tube.

Une plaque de compression 31 est positionnée en extrémité de tube-enveloppe au delà de la plaque de compensation 21 par rapport aux membranes située à cette extrémité. Cette plaque de compression comporte une âme 32 constituée d'un matériau à forte résistance mécanique et à forte rigidité recouverte d'un revêtement 33 constitué en un matériau compatible avec le fluide traité. L'âme métallique de cette plaque est réalisée de manière à ne pas présenter d'angle vif, ce qui permet de la recouvrir sans difficulté de ce revêtement.

Les plaques de compensation 21 et de compression 31 sont placées en appui glissant l'une sur l'autre par leurs faces respectives 27 et 37, un joint torique 28 situé dans un logement 29 assurant l'étanchéité entre ces deux plaques sur leur périphérie.

Des tirants 41 qui passent par des orifices 42 percés dans la périphérie de la plaque de compression assurent la mise en compression et par là la cohésion de l'ensemble du module. La partie de ces tirants qui participe à la compensation des dilatations thermiques de l'ensemble du module est, dans l'exemple de réalisation présenté en figure 1, celle comprise entre la face de rondelles métalliques 44 placées sous des écrous 43, qui correspond au plan ll-ll d'appui des tirants et qui sert de butée à la plaque de compression, et un plan d'appui symétrique et non représenté qui est supposé situé à l'autre extrémité du module. Cette partie des tirants et sa longueur sont appelées par la suite partie active et longueur active des tirants. De façon analogue, on appelle plan d'appui de la plaque de compression le plan par lequel elle reçoit la force de maintien venant des tirants et épaisseur active de la plaque de compression la distance entre son plan d'appui et l'interface entre plaque de compression et plaque de compensation.

Dans un tel module, la plaque de compression 31 sert aussi de bride de raccordement du module et elle est munie de trous taraudés lui permettant de recevoir des vis, telle la vis 04, pour la fixation de la bride 03 et en conséquence le plaquage de l'embout 01 du tube de circulation 0 contre elle-même.

Dans un module selon l'invention, la plaque de compensation et la plaque de compression coopèrent pour assurer les fonctions mécaniques et d'étanchéité nécessaires au bon fonctionnement du module.

Sur le plan mécanique, la plaque de compensation, bien qu'elle soit percée d'orifices pour le passage du fluide, ne doit pas se déformer de façon sensible sous l'effet de la pression du fluide. Une déformation trop forte sous l'effet de la pression du fluide situé entre les membranes et le tube-enveloppe écarterait les zones centrales des deux plaques de compensation l'une par rapport à l'autre, ce qui supprimerait le maintien avec étanchéité des membranes par compression entre les joints 24. Or les polymères du type PVDF qui sont communément employés comme matériau compatible avec le liquide traité, sont relativement flexibles, le module d'élasticité de est ainsi de l'ordre de 1500 à 2000 MPa pour le PVDF à température ambiante. Dans le module selon l'invention, la plaque de compensation, parce qu'elle s'appuie sur une plaque de compression qui comporte une âme épaisse en matériau rigide, donc peu déformable, ne peut pas se déformer de façon appréciable.

Un tel module assure la compensation des dilatations thermiques de ses divers composants perpendiculairement à son axe de la façon suivante:
- la plaque de compensation 21 et le tube-enveloppe 11 étant constitués du même matériau ou de matériaux de coefficients de dilatation voisins, leurs dilatations dans la direction transversale, c'est-à-dire perpendiculaire à l'axe du module sont égales. Le joint torique 25 assure donc l'étanchéité quelle que soit la température.
- la plaque de compression se dilate moins dans la direction transversale que la plaque de compensation. Mais cette différence de dilatation est absorbée par leur glissement l'une sur l'autre, avec maintien de l'étanchéité par le joint 28.

En ce qui concerne les dilatations longitudinales:
- le tube-enveloppe se dilate en général beaucoup plus que la membrane; par exemple, avec un tube-enveloppe en PVDF de coefficient de dilatation 160 . 10 ⁻⁶/°C et une membrane en alumine de coefficient de dilatation 6. 10 ⁻⁶/°C et d'une longueur de 1 m, l'écart de dilatation est de l'ordre de 10 mm pour une élévation de température de 70 °C. Cette différence se dilatation est absorbée par le coulissement du tube enveloppe sur le joint torique 25
- il est nécessaire que les membranes soient maintenues en permanence en compression longitudinale par les joints 24, quelles que soient les variations de température. Si l'on considère que l'état de référence est l'état initial à température ambiante après l'assemblage du module, il faut que, lors d'une augmentation de température, l'ensemble plaque de compression - plaque de compensation - joints de montage des membranes - membranes compris entre les deux plans d'appui des tirants symbolisés par le plan BB sur la figure 1 et par son symétrique non représenté à l'autre extrémité du module se dilate légèrement plus que la partie des tirants comprise entre ces mêmes plans. Cet écart de dilatation E doit rester inférieur à la quantité supplémentaire J dont les joints 24 peuvent se comprimer de façon élastique par rapport à leur état initial. En pratique, on peut régler l'écart de dilatation E en choisissant de façon appropriée l'épaisseur de la plaque de compensation. En effet, cette plaque est constituée d'un polymère dont le coefficient de dilatation est très supérieur à celui des matériaux frittés constituant les membranes et à celui du métal constituant les tirants. Une variation de son épaisseur entraîne donc une variation significative de l'écart de dilatation E. Par ailleurs, la quantité J dont les joints 24 peuvent être comprimés de façon élastique est proportionnelle à leur épaisseur. On peut donc adapter cette épaisseur à l'écart de dilatation E à absorber.

Plusieurs variantes de conception peuvent être mises en oeuvre pour mieux réaliser la compensation et l'absorption des dilatations longitudinales et les adapter aux dimensions, matériaux et conditions de fonctionnement particulières.

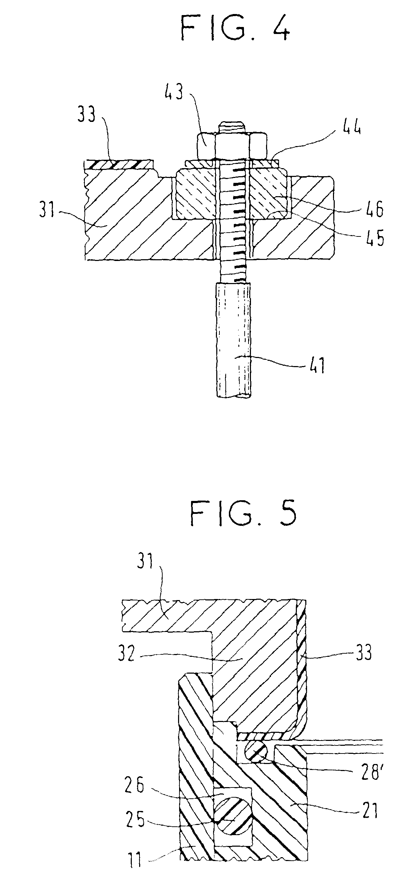

Dans une première variante illustrée dans la figure 4, des cales de compensation de dilatation 46 sont insérées entre une classique rondelle 44 placée sous l'écrou 43 et une partie du dessus 45 de la plaque de compression. Le plan d'appui des tirants reste alors la face de la rondelle 44 tournée vers l'intérieur du module, et le plan d'appui de la plaque de compression est celui sur lequel la cale de compensation s'appuie sur la plaque de compression. La température en service des cales de compensation 46 sera intermédiaire entre celle de la plaque de compression 31, qui est voisine de la température du fluide traité, et celle des tirants 41.

Ces cales de compensation 46 peuvent être rigides; suivant que leur coefficient de dilatation est supérieur ou inférieur à celui des tirants, elles permettent d'augmenter ou de diminuer la compression des joints 24 en cas d'augmentation de la température de ces cales. Elles peuvent aussi être constituées d'un matériau élastique; cette élasticité permet alors d'absorber les dilatations différentielles longitudinales sans variation importante de la compression appliquée sur les joints 24. Dans une variante de réalisation, les cales de compensation peuvent éventuellement être constituées par des ressorts et particulièrement par des rondelles de type Belleville.

Dans une deuxième variante, le module entier, y compris les tirants, est entouré d'une gaine externe tubulaire, non représentée, destinée à assurer une isolation thermique des tirants par rapport à l'extérieur du module, de manière à amener la température des tirants à une valeur plus proche de celle de l'intérieur du module. Ceci donne une possibilité supplémentaire de régler l'écart de dilatation E.

Dans une troisième variante illustrée sur la figure 5, le revêtement 33 de la plaque de compression 31 ne couvre pas toute la surface d'appui de l'âme 32 de cette plaque sur la plaque de compensation 21. Ceci permet un appui direct, ici supposé périphérique, de la plaque de compensation sur le métal de la zone de l'âme de la plaque de compression à l'endroit où il n'y a pas de revêtement. Un joint 28' est inséré entre la plaque de compensation et une zone de la plaque de compression recouverte du revêtement à l'intérieur de l'espace délimité par la zone d'appui périphérique pour plaque de compensation que comporte la plaque de compression.

L'intérêt de cette variante est de moins comprimer le revêtement, qui est en général moins dur et moins résistant que le matériau massif de la plaque de compensation, donc de diminuer le risque que ce revêtement se déforme localement sous l'effet de cette compression.

Il est aussi possible de fixer, préférablement d'une manière étanche, l'une des plaques de compensation au tube-enveloppe. Ceci est notamment envisageable si le module ne comporte qu'une plaque de compression mobile, l'autre étant éventuellement remplacée par un fond fixe solidaire du tube-enveloppe.

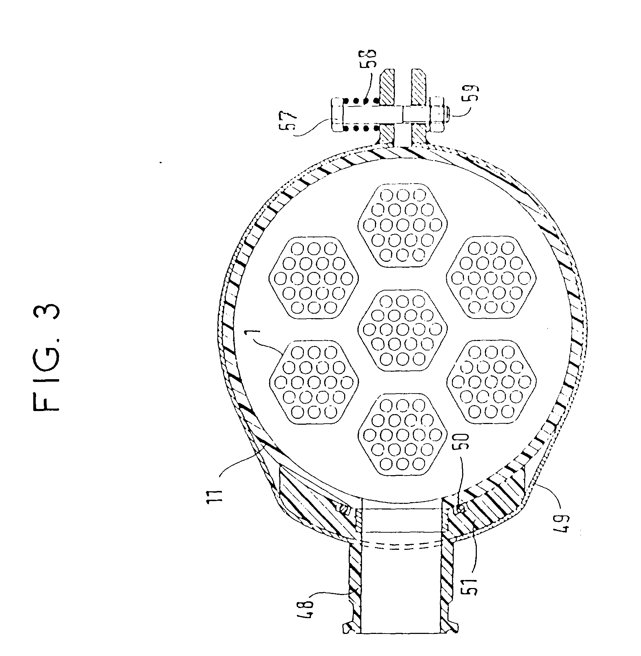

La ou les entrées ou sorties latérales de fluide dans le tube-enveloppe 11, sont susceptibles de plusieurs variantes de construction. Dans une première variante, non représentée, ces entrées sont susceptibles d'être réalisées par soudage d'un tube latéral perpendiculaire au tube-enveloppe, selon une technique connue. Dans une variante qui est représentée sur les figures 1, 3 un tube latéral 48 est fixé sur le tube-enveloppe 11 par un assemblage mécanique maintenu par un collier 49 fixé par un boulon 57,59 à ressort 58, l'etanchéité étant obtenue au moyen d'un joint torique 50. Le collier 49 peut être en un même matériau que le tube-enveloppe, il peut aussi être métallique, mais dans ce cas il doit posséder une élasticité suffisante pour laisser la plaque de compensation et le tube-enveloppe se dilater sans générer de contraintes trop élevées.

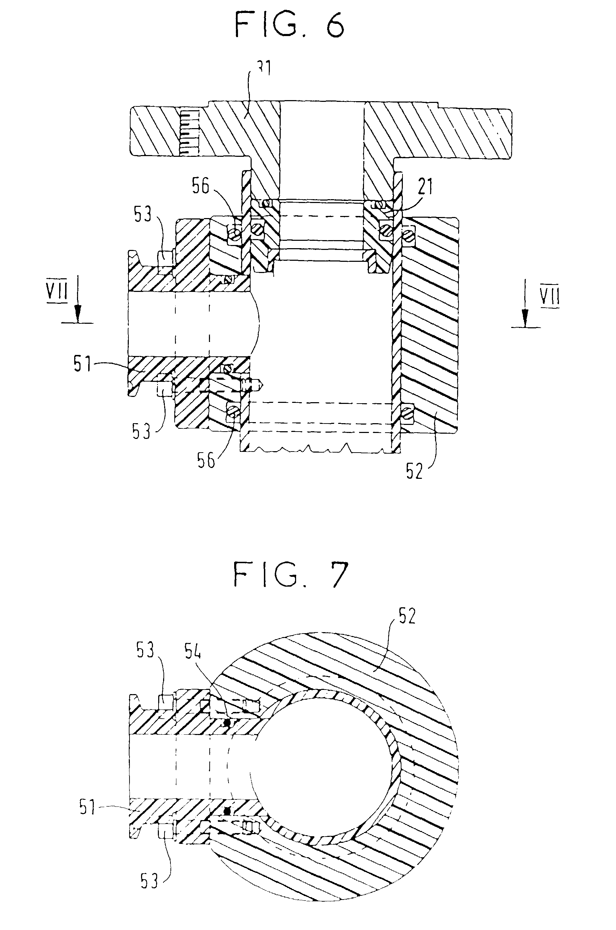

Dans une autre variante de réalisation présentée sur les figures 6, 7, un tube latéral 51 est fixé sur le tube-enveloppe 11 par l'intermédiaire d'un manchon 52 qui se monte par coulissement. Ce manchon est constitué d'un bloc du même polymère que la plaque de compensation et le tube-enveloppe et il reçoit une extrémité du tube latéral 51 qui est conformée de manière à pouvoir venir se fixer par des vis 53 sur lui. Un joint 54 est positionné entre le tube latéral 51 et le manchon 52 pour assurer l'étanchéité, des joints 56 assurant l'étanchéité entre tube-enveloppe et manchon.

La description qui suit propose une série d'exemples de mise en oeuvre de modules selon l'invention.

### EXEMPLE 1

Un module à sept éléments filtrants selon l'invention comprend les éléments suivants, tels que représentés sur les figures 1 et 3:
- sept membranes composées d'un support en alumine poreuse à dix-neuf canaux de diamètre 4 mm où circule le liquide à filtrer, la surface de chaque canal étant revêtue d'une couche de zircone de diamètre de pores 0,1 micron et d'épaisseur 12 microns. La longueur de ces membranes est 1000 mm. Le coefficient de dilatation de l'alumine est 6 . 10⁻⁶ /°C.
- à chaque extrémité du module, les joints de montage des membranes sont insérés dans des logements dans une plaque de compensation en PVDF dont le coefficient de dilatation est de 160 . 10⁻⁶ / °C, dont l'épaisseur au fond des logements est 8 mm et dont le diamètre extérieur est de 121,8 mm . Les joints, d'une épaisseur de 5 mm entre l'extrémité de la membrane et le fond de leur logement, sont en PTFE (polytétrafluoréthylène) dont le coefficient de dilatation est de 120 . 10⁻⁶ / °C. Cette plaque de compensation est munie sur sa périphérie d'une gorge dans laquelle est logé un joint torique en élastomère perfluoré de la marque Viton® qui fait étanchéité avec un tube-enveloppe de diamètre intérieur 122 mm, d'épaisseur 4 mm et de longueur 1041 mm également constitué de PVDF.
- la plaque de compensation est pressée contre les joints d'extrémité des membranes par une plaque de compression formée d'une âme en acier inoxydable 316 L de coefficient de dilatation 17,6 . 10⁻⁶ / °C et dont l'épaisseur active est de 30 mm, revêtue d'une couche d'ETFE (copolymère d'éthylène et de tétrafluoroéthylène) de coefficient de dilatation 94 . 10⁻⁶ / °C et d'épaisseur 0,6 mm. Les joints toriques entre plaque de compression et plaque de compensation sont en élastomère perfluoré.
- sept tirants en acier inoxydable 316L d'un diamètre de 10 mm assurent le maintien en compression et la cohésion de l'ensemble du module.

Ce module est assemblé de manière à ce qu'à température ambiante (20 °C) les joints d'extrémité des membranes soient comprimés d'environ 0,1 mm. Il est ensuite utilisé pour assurer la filtration finale à 90 °C d'une eau ultra-pure de résistivité 18 Mégohm-cm. Les constituants intérieurs du module, soit les membranes, leurs joints, la plaque de compensation et la plaque de compression, prennent la température du liquide filtré. Les tirants, qui ne sont pas en contact avec l'eau à filtrer, restent à une température de 35 °C proche de la température ambiante.

La différence entre la somme des dilatations longitudinales des parties intérieures du module et celle de la partie active des tirants est 0,48 mm. Cette différence de dilatation est absorbée par les joints en PTFE, dont chacun se comprime de 0,24 mm supplémentaires par rapport à leur état de compression à la température ambiante. Le tube-enveloppe prend la température du liquide filtré et s'allonge donc d'environ 12 mm en glissant sur le joint torique qui entoure chacune des plaques de compensation, alors que les membranes ne s'allongent que de 0,4 mm.

Le diamètre des plaques de compensation augmente de 1,4 mm et celui de la partie des plaques de compression située en regard des plaques de compensation augmente de 0,14 mm. La différence de dilatation est absorbée par glissement de la plaque de compression sur la plaque de compensation

### EXEMPLE 2

On filtre de l'eau ultra-pure dans les mêmes conditions que dans l'exemple 1, mais avec un module qui comprend:
- dix-neuf membranes identiques à celles de l'exemple 1, mais d'une longueur 800 mm
- des joints d'extrémité de membrane en PTFE, d'une épaisseur de 3 mm entre l'extrémité de la membrane et le fond de leur logement
- des plaques de compensation en PVDF dont l'épaisseur au fond des logements des joints est de 20 mm et de diamètre 207,8 mm
- un tube-enveloppe en PVDF de diamètre intérieur 208 mm et de longueur 864 mm
- des plaques de compression en acier inoxydable 316L dont l'épaisseur active est de 36 mm, revêtues d'ETFE d'une épaisseur de 0,6 mm
- 12 tirants en acier inoxydable 316L d'un diamètre de 10 mm
- des joints toriques en élastomère du type EPDM

De plus, l'ensemble du module, y compris les tirants, est entouré d'un tube isolant, ce qui maintient la température des tirants à 50 °C.

La différence de dilatation entre l'intérieur du module et les tirants est 0,44 mm. Cette différence est absorbée par les joints en PTFE, dont chacun se comprime de 0,22 mm.

Le tube-enveloppe s'allonge de 10 mm en glissant sur les joints toriques de la périphérie des plaques de compensation, alors que les membranes ne s'allongent que de 0,34 mm.

Le diamètre des plaques de compensation augmente de 2.3 mm et celui de la partie des plaques de compression située en regard des plaques de compensation augmente de 0,26 mm. La différence de dilatation est absorbée par glissement de la plaque de compression sur la plaque de compensation

### EXEMPLE 3

On filtre de l'eau ultra-pure dans les mêmes conditions que dans l'exemple 1, mais avec un module qui comprend:
- une membrane identique à celles de l'exemple 1,
- des joints d'extrémité de membrane en PTFE, d'une épaisseur de 4 mm entre l'extrémité de la membrane et le fond de leur logement,
- des plaques de compensation en un polymère du type perfluoroalkoxy (PFA) dont le coefficient de dilatation est de 140 . 10⁻⁶ / °C. L'épaisseur de ces plaques au fond des logements des joints est de 10 mm, et leur diamètre 53,8 mm,
- un tube-enveloppe également en PFA de diamètre intérieur 54 mm, d'épaisseur 3 mm et de longueur 1040 mm,
- des plaques de compression en acier inoxydable 316L dont l'épaisseur active est de 24 mm, revêtues d'ETFE d'une épaisseur de 0,4 mm,
- des joints toriques en élastomère perfluoré,
- 4 tirants en acier inoxydable 316L d'un diamètre de 8 mm.

Ce module est assemblé de manière à ce qu'à température ambiante (20 °C) les joints d'extrémité des membranes soient comprimés d'environ 0,1 mm. Il est ensuite utilisé pour assurer la filtration finale à 90 °C d'une eau ultra-pure de résistivité 18 Mégohm-cm. Les éléments intérieurs du module soit les membranes, leurs joints, la plaque de compensation et la plaque de compression, prennent la température du liquide filtré. Les tirants, qui ne sont pas en contact avec l'eau à filtrer, restent à une température de 35 °C proche de la température ambiante. La différence entre la somme des dilatations longitudinales des parties intérieures du module et celle de la partie active des tirants est 0,46 mm. Cette différence de dilatation est absorbée par les joints en PTFE, dont chacun se comprime de 0,23 mm supplémentaires. Le tube-enveloppe prend la température du liquide filtré et s'allonge d'environ 10 mm en glissant sur le joint torique qui entoure chacune des plaques de compensation, alors que les membranes ne s'allongent que de 0,4 mm,

Le diamètre des plaques de compensation augmente de 0,53 mm et celui de la partie des plaques de compression située en regard des plaques de compensation augmente de 0,07 mm. La différence de dilatation est absorbée par glissement de la plaque de compression sur la plaque de compensation

### EXEMPLE 4

On filtre un mélange de solvants organiques à 70 °C avec un module qui comprend:
- trois membranes tubulaires en carbone poreux d'un diamètre intérieur 20 mm, d'une épaisseur de 3 mm, dont la surface intérieure est recouverte d'une couche de carbone poreux d'épaisseur 25 microns et de diamètre de pores 0,8 micron. La longueur de ces membranes est de 500 mm et le coefficient de dilatation de ce carbone est 3 . 10⁻⁶ / °C.
- des joints d'extrémité de membrane en PTFE, d'une épaisseur de 5 mm entre l'extrémité de la membrane et le fond de leur logement,
- des plaques de compensation en PVDF dont l'épaisseur au fond des logements des joints est de 15 mm et le diamètre 126,8 mm,
- un tube-enveloppe en PVDF de diamètre intérieur 127 mm, d'épaisseur 4 mm et de longueur 552 mm,
- des plaques de compression en acier inoxydable 316L dont l'épaisseur active est de 24 mm, revêtues de PVDF d'une épaisseur de 0,8 mm,
- des joints toriques en élastomère perfluoré,
- huit tirants en acier inoxydable 316L d'un diamètre de 8 mm

La différence de dilatation entre l'intérieur du module et les tirants est 0,38 mm. Cette différence est absorbée par les joints en PTFE, dont chacun se comprime de 0,19 mm.

Le tube-enveloppe s'allonge de 4,4 mm en glissant sur les joints toriques de la périphérie des plaques de compensation, alors que les membranes ne s'allongent que de 0,07 mm.

Le diamètre des plaques de compensation augmente de 1,0 mm et celui de la partie des plaques de compression située en regard des plaques de compensation augmente de 0,1 mm. La différence de dilatation est absorbée par glissement de la plaque de compression sur la plaque de compensation

### EXEMPLE 5

On filtre une solution de NaCl d'une concentration massique de 3% à 50 °C avec un module qui comprend:
- trois éléments filtrants composés d'un support en alumine poreuse à 19 canaux de diamètre 6 mm où circule le liquide à filtrer, la surface de chaque canal étant revêtue d'une couche d'alumine poreuse de diamètre de pores 0,2 micron et d'épaisseur 20 microns. La longueur de ces membranes est de 1000 mm;
- des joints d'extrémité de membrane en PTFE, d'une épaisseur de 6 mm entre l'extrémité de la membrane et le fond de leur logement.
- des plaques de compensation en PVC-C (chlorure de polyvinyle surchloré) dont l'épaisseur au fond des logements des joints est 15 mm et le diamètre 126,8 mm. Le coefficient de dilatation du PVC-C est 70 . 10⁻⁶ / °C,
- un tube-enveloppe en PVC-C de diamètre intérieur 127 mm, d'épaisseur 4 mm et de longueur 1054 mm,
- des plaques de compression en acier inoxydable 316Ti dont l'épaisseur active est de 24 mm, revêtues de PVDF d'une épaisseur de 0,7 mm. Le coefficient de dilatation du 316Ti est 16,5 . 10⁻⁶ / °C,
- des joints toriques en élastomère silicone
- huit tirants en acier inoxydable 316L d'un diamètre de 10 mm.

La différence de dilatation entre l'intérieur du module et les tirants est 0,32 mm. Cette différence est absorbée par les joints en PTFE, dont chacun se comprime de 0,16 mm.

Le tube-enveloppe s'allonge de 2,2 mm en glissant sur les joints toriques de la périphérie des plaques de compensation, alors que les membranes ne s'allongent que de 0,2 mm.

Le diamètre des plaques de compensation augmente de 0,27 mm et celui de la partie des plaques de compression située en regard des plaques de compensation augmente de 0,06 mm. La différence de dilatation est absorbée par glissement de la plaque de compression sur la plaque de compensation.

### EXEMPLE 6

On filtre un mélange gazeux d'argon et d'HCl à 20 °C avec un module qui comprend:
- une membrane composée d'un support en alumine poreuse à dix neuf canaux de diamètre 4 mm, la surface de chaque canal étant revêtue d'une couche d'alumine poreuse de diamètre de pores 0,1 micron et d'épaisseur 5 microns. La longueur de cette membrane est de 1000 mm. La filtration s'effectue de l'extérieur de la membrane vers l'intérieur, le gaz filtré s'évacuant par chacun des dix neuf canaux.
- des joints d'extrémité de membrane en PTFE, d'une épaisseur de 4 mm entre l'extrémité de la membrane et le fond de son logement,
- des plaques de compensation en PVDF dont l'épaisseur au fond des logements des joints est 10 mm et le diamètre 51,8 mm,
- un tube-enveloppe en PVDF de diamètre intérieur 52 mm, d'épaisseur 4 mm et de longueur 1040 mm,
- des plaques de compression en acier inoxydable 316L dont l'épaisseur active est de 24 mm, revêtues d'ETFE d'une épaisseur de 0,8 mm,
- des joints toriques en élastomère perfluoré,
- quatre tirants en acier inoxydable 316L d'un diamètre de 8 mm,

Le module étant utilisé à 20°C qui est aussi la température à laquelle il a été assemblé, il n'y a pas de dilatation différentielle par rapport aux dimensions à l'assemblage.

Les modules selon l'invention peuvent être utilisés dans de nombreuses séparations telles que la filtration des liquides (microfiltration, ultrafiltration, nanofiltration), l'osmose inverse ou encore la filtration des gaz. Ils sont particulièrement appropriés pour la filtration de fluides ultra-purs, en particulier d'eau ultra-pure dans les industries pharmaceutique et micro-électronique et de façon générale dans les cas où les modules connus en acier inoxydable ne conviennent pas soit parce qu'ils se corrodent (par exemple filtration de solutions ou de gaz contenant des chlorures), soit parce qu'ils relarguent trop d'ions métalliques.

Les modules selon l'invention peuvent aussi être utilisés comme réacteur à membrane, soit pour effectuer des transformation catalytiques (par exemple pour faire réagir un fluide avec un catalyseur situé sur ou dans la membrane), soit pour faire réagir un fluide qui circule d'un côté de la membrane avec un autre fluide provenant de l'autre côté de la membrane et qui traverse la membrane, le rôle de la membrane étant de réguler le débit du deuxième fluide.

## Revendications

1. Module de traitement de fluides par séparation ou traitement catalytique, incluant au moins une membrane rigide de traitement (1) logée dans un carter équipé de moyens coopérant avec les extrémités de la ou des membrane(s) pour leur maintien en position, ledit module comportant:
- un carter ou tube-enveloppe (11) constitué d'un matériau rigide compatible avec le fluide à traiter,
- une plaque de compensation (21) au moins, disposée à l'une des extrémités du carter, dimensionnée pour coulisser longitudinalement dans l'extrémité la recevant et comportant un ou plusieurs orifices (22) prévus pour recevoir chacun une extrémité d'une membrane, ladite plaque de compensation étant constituée d'un matériau qui est compatible avec le fluide à traiter et qui présente un coefficient de dilatation égal ou très voisin de celui que présente le carter,
- une plaque de compression (31) au moins, disposée à l'extrémité du carter associée à chaque plaque de compensation, contre laquelle elle vient s'appliquer en conservant une possibilité de glissement transversal, chaque plaque de compression ayant une forte rigidité et étant constituée d'un matériau à forte résistance mécanique revêtu d'un matériau, compatible avec le fluide à traiter, au moins dans les zones où le fluide est susceptible de circuler, des orifices de la plaque de compression étant disposés en regard des orifices de la plaque de compensation contre laquelle cette plaque de compression est appliquée,
- des tirants (41) passant dans des trous (42) ménagés à la périphérie des plaques de compression, lesquelles pressent sur les extrémités des membranes correspondantes par l'intermédiaire de la plaque de compensation sur laquelle elles s'appuient, lesquels tirants mis en tension, assurent le maintien en position de ces membranes correspondantes dans le carter.

2. Module de traitement, selon la revendication 1, caractérisé en ce qu'il comporte au moins une plaque de compensation (21) ayant un matériau et un dimensionnement choisis en fonction de ceux des autres constituants du module que sont le carter, les membranes, les tirants et la ou les plaques de compression pour que les variations dimensionnelles de la ou des dites plaque(s) de compensation, en fonction de la température dans la gamme des températures susceptibles d'être atteintes par cette ou ces plaque(s) de compensation, se combinent à celles des autres constituants lors du fonctionnement de module dans la gamme de températures admise pour le ou les fluides traités, pour conserver l'élasticité des joints d'assemblage pour l'étendue de la gamme de températures prévue pour le fonctionnement du module en fonction du fluide au des fluides traités.

3. Module de traitement, selon la revendication 2, caractérisé en ce qu'il comporte au moins une plaque de compensation dont le dimensionnement en épaisseur entre plaque de compression et membrane(s) de traitement est fixée pour conserver l'élasticité des joints d'assemblage pour l'étendue de la gamme de températures prévue pour le fonctionnement du module en fonction du fluide ou des fluides traités.

4. Module de traitement, selon la revendication 2, caractérisé en ce qu'il comporte au moins une plaque de compression (31) ayant des tirants qui prennent appui sur elle par l'intermédiaire d'éléments de compensation (46), du type cale de compensation, dont l'action est complémentaire de celle de la ou des plaques de compensation et dont le matériau et les dimensions sont choisis en fonction de ceux des autres constituants du module que sont le carter, les membranes, les joints d'assemblage, les tirants et la ou les plaques de compression et de compensation.

5. Module de traitement, selon la revendication 2, caractérisé en ce qu'il comporte au moins une plaque de compression (31) ayant des tirants (41) qui prennent appui sur elle par l'intermédiaire d'éléments de compensation, du type ressort, dont l'action est complémentaire de celle de la ou des plaques de compensation et dont le matériau et les dimensions sont choisis en fonction de ceux des autres constituants du module que sont le carter, les membranes, les joints d'assemblage, les tirants et la ou les plaques de compression et de compensation.

6. Module de traitement, selon l'une des revendications 1 à 5, caractérisé en ce qu'il comporte une gaine externe entourant le carter et les tirants de manière à rapprocher la température de ces derniers de celle des constituants du module qui sont en contact avec le ou les fluides traités.

7. Module de traitement, selon l'une des revendications 1 à 6, caractérisé en ce qu'il comporte au moins un joint (28) assurant l'étanchéité entre plaque de compensation et plaque de compression et/ou un joint (25) assurant l'étanchéité entre plaque de compensation et carter.

8. Module de traitement, selon l'une des revendications 1 à 7, caractérisé en ce qu'il comporte une plaque de compensation et une plaque de compression qui appuient respectivement l'une sur l'autre à leurs périphéries respectives, au delà du revêtement de matériau compatible avec le fluide circulant dans les orifices pour fluide qu'elle comporte, au mains un joint d'étanchéité périphérique (28') étant inséré entre la plaque de compensation et une zone de la plaque de compression recouverte dudit revêtement à l'intérieur de l'espace délimité par la zone d'appui périphérique pour plaque de compensation que comporte la plaque de compression.

9. Module de traitement, selon l'une des revendications 1 à 8, caractérisé en ce qu'il comporte une plaque de compensation qui est fixée au tubeenveloppe de manière étanche.

10. Module de traitement, selon l'une des revendications 1 à 9, caractérisé en ce qu'il comporte un carter (1 1) qui est doté d'au moins une ouverture latérale pour fluide et qui porte un tube latéral (48) débouchant hors du module.

11. Module de traitement, selon la revendication 10, caractérisé en ce qu'il comporte au moins un tube latéral (48) fixé sur le carter (11) par un assemblage mécanique à collier (49), cet assemblage comportant un joint d'étanchéité (50) inséré entre le conduit et le carter.

12. Module de traitement, selon la revendication 10. caractérisé en ce qu'il comporte au moins un tube latéral (51) fixé sur le carter 23 (11) par un assemblage à manchon (52) constitué en un même matériau que le carter qu'il enserre, l'assemblage étant étanchéifié par des joints annulaires (56), et à élément de raccordement (51) amovible assujetti mécaniquement sur le manchon au niveau d'un orifice de ce dernier qui se positionne en regard d'un orifice analogue ménagé dans la paroi du carter pour un passage de fluide.

13. Module de traitement, selon l'une des revendications 1 à 12, caractérisé en ce qu'il comporte un carter et une ou des plaques de compensation en polyfluorure de vinylidène (PVDF), des joints d'assemblage en polytétrafluoréthylène (PTFE), la ou les plaques de compression et les tirants étant préférablement en un métal tel que l'acier, le revêtement que porte la au les plaques de compression étant en un matériau inerte à faible perméabilité, tel qu'un polymère fluoré.

14. Module de traitement, selon l'une des revendications 1 à 12, caractérisé en ce qu'il comporte un carter et une ou des plaques de compensation en perflucroalkoxy (PFA), des joints d'assemblage en polytétrafluoréthylène (PTFE), la ou les plaques de compression et les tirants étant préférablement en un métal tei que l'acier, le revêtement que porte la ou les plaques de compression étant en un matériau inerte à faible perméabilité, tel qu'un polymère fluoré.

15. Module de traitement, selon l'une des revendications 13, 14, caractérisé en ce que le revêtement de plaque de compression est en copolymère d'éthylène et de tétraflucroéthylène (ETFE).

16. Module de traitement, selon l'une des revendications 1 à 12, caractérisé en ce qu'il comporte un carter et une ou des plaques de compensation en chlorure de polyvinyle surchloré (PVC-C), des joints d'assemblage en polytétrafluoréthylène (PTFE), la ou les plaques de compression et les tirants étant préférablement en un métal, tel que l'acier, le revêtement que porte la ou les pîaques de compression étant en un matériau inerte à faible perméabilité, préférablement en polyfluorure de vinylidène (PVDF).

17. Module de traitement, selon l'une des revendications 1 à 16, caractérisé en ce qu'il contient un produit catalyseur placé contre ou dans les membranes à l'intérieur du carter.

18. Procédé de traitement par un module selon l'une des revendications 1 à 16 consistant en une filtration d'un fluide choisi parmi l'eau ultra-pure, une solution contenant des ions chlorure, un liquide hydrocarboné.

19. Procédé de traitement par un module selon l'une des revendications 1 à 16 consistant en une filtration de gaz et notamment de gaz corrosif.

20. Procédé de traitement par un module selon l'une des revendications 1 à 17 incluant une phase de transformation catalytique d'un fluide par un produit catalyseur placé à l'intérieur du carter contre ou dans la ou les membrane(s).

21. Procédé de traitement par un module selon l'une des revendications 1 à 17 incluant une phase de réaction catalytique d'un fluide injecté d'un côté de la ou des membrane(s) avec un fluide injecté de l'autre côté de 10 cette ou de ces membrane(s).
